(19) Europäisches Patentamt
European Patent Office
Office européen des brevets

(11) Numéro de publication : **0 031 288**
**B2**

(12) # NOUVEAU FASCICULE DE BREVET EUROPÉEN

(45) Date de publication du nouveau fascicule du brevet : **23.12.87**

(51) Int. Cl.⁴ : **C 08 L 83/04**, C 09 C 1/30, C 08 K 3/36

(21) Numéro de dépôt : **80420147.3**

(22) Date de dépôt : **17.12.80**

(54) **Compositions organosiliciques contenant de nouvelles silices de précipitation à propriétés renforçantes améliorées.**

(30) Priorité : **20.12.79 FR 7931218**

(43) Date de publication de la demande : **01.07.81 Bulletin 81/26**

(45) Mention de la délivrance du brevet : **18.01.84 Bulletin 84/03**

(45) Mention de la décision concernant l'opposition : **23.12.87 Bulletin 87/52**

(84) Etats contractants désignés : **BE DE GB IT NL**

(56) Documents cités :
**EP-A- 0 018 866**
**DE-A- 2 801 497**
**FR-A- 2 222 313**
**FR-A- 2 353 486**
**GB-A- 2 001 303**
**US-A- 2 751 366**
**KAUTSCHUK + GUMMI KUNSTSTOFFE, vol. 2, 1979, pages 89-93**
**KAUTSCHUK + GUMMI KUNSTSTOFFE, no. 9/1980, pages 699-705**
**Le dossier contient des informations techniques présentées postérieurement au dépôt de la demande et ne figurant pas dans le présent fascicule.**

(73) Titulaire : **RHONE-POULENC CHIMIE**
**25, quai Paul Doumer**
**F-92408 Courbevoie Cedex (FR)**

(72) Inventeur : **Lagarde; Robert**
**62, rue de l'Oasis**
**F-69320-Feyzin (FR)**
Inventeur : **Vrisakis, Georges**
**14, rue Galliéni**
**F-69660 Collonges au Mont d'Or (FR)**

(74) Mandataire : **Seugnet, Jean Louis et al**
**RHONE-POULENC INTERSERVICES Service Brevets Chimie Centre de Recherches de Saint-Fons B.P. 62**
**F-69192 Saint-Fons Cedex (FR)**

**EP 0 031 288 B2**

Jouve, 18, rue St-Denis, 75001 Paris, France

**Description**

La présente invention concerne à titre de produits industriels nouveaux des compositions organosiliciques et en particulier organopolysiloxaniques contenant de nouvelles silices de précipitation ayant simultanément de grandes surfaces spécifiques BET et CTAB et conférant aux élastomères organosiliciques obtenus après vulcanisation des propriétés mécaniques et thermiques améliorées.

Il est bien connu de renforcer les propriétés mécaniques et thermomécaniques des élastomères organopolysiloxaniques en introduisant dans les compositions organopolysiloxaniques et avant la vulcanisation, des charges diverses telles que le noir de carbone et des silices de combustion ou de précipitation.

Les meilleures propriétés renforçantes sont obtenues en utilisant des silices de combustion ayant une surface spécifique élevée. L'emploi de silices de précipitation n'a pas jusqu'à ce jour permis d'atteïndre un renforcement des propriétés des élastomères organopolysiloxaniques, aussi important que celui qui est observé lors de l'emploi des silices de combustion.

On a cependant recherché à améliorer pour les applications silicones, les silices de précipitation en essayant de leur conférer des qualités sensiblement égales à celles des silices de combustion. Pour élever la capacité au renforcement des élastomères organopolysiloxaniques on a mis au point divers procédés de préparation de silices de précipitation de plus en plus complexes et sophistiqués et selon lesquels on règle durant la préparation et de manière précise la température, les concentrations en réactifs (silicate, acide), les vitesses de coulée des réactifs, les séquences d'additions successives de réactifs, la valeur du pH (brevet français 1 352 354 ; brevets américains 3 954 944 et 4 127 641).

On a cherché par ailleurs à améliorer les qualités d'agent de renforcement des silices de précipitation pour les applications silicones en rendant les silices hydrophobes par un traitement de surface approprié (emploi par exemple se silane ou de silazane). Des silices hydrophiles rendues hydrophobes par un tel traitement et utilisables pour les applications silicones sont par exemple décrites dans le brevet français 2 356 596.

Enfin, et tout récemment on a décrit une silice de précipitation très améliorée mais conférant cependant aux élastomères organopolysiloxaniques des propriétés renforçantes plus faibles que celles conférées par les silices de combustion (conférence internationale du caoutchouc tenue à Kiev du 10 au 14 octobre 1978).

Il a été maintenant trouvé et c'est ce qui constitue l'objet de la présente invention de nouvelles compositions organopolysiliciques durcissables et contenant 5 à 50 % de silice de précipitation utilisées à titre de charges renforçantes ayant éventuellement subi un traitement de modification, de propriétés de surface, les silices non traitées ayant les caractéristiques suivantes :

| | |
|---|---|
| surface BET | 190 à 340 $m^2/g$ |
| surface CTAB | 180 à 280 $m^2/g$ |
| rapport surface BET/CTAB | 0,9 à 1,2 |
| teneur en sodium résiduel | $<$ 500 ppm |
| pH | 3,5 à 6 |
| volume spécifique $V_0$ | $>$ 4,2 $cm^3/g$ |
| taille des particules estimées par refus au tamis de 45 $\mu m$ | $<$ 0,05 % |

De manière préférentielle l'objet de la présente invention est constitué par les compositions organosiliciques dont la charge renforçante est en partie ou en totalité constituée par des silices de précipitation de nature hydrophile, ayant éventuellement subi un traitement de modification des propriétés de surface, les silices hydrophiles ayant les caractéristiques suivantes :

| | |
|---|---|
| surface BET | 200 à 250 $m^2/g$ |
| surface CTAB | 190 à 240 $m^2/g$ |
| rapport surface BET/CTAB | 0,9 à 1,2 |
| teneur en sodium résiduel | $<$ 500 ppm |
| pH | 4,5 à 5,5 |
| volume spécifique $V_0$ | $>$ 4,2 $cm^3/g$ |
| taille des particules estimée par refus au tamis de 45 $\mu m$ | $<$ 0,05 % |

Les valeurs de diverses caractéristiques servant à définir les silices de préparation sont déterminées de la manière suivante :

La surface spécifique BET est déterminée selon la méthode de Brunauer-Emmet-Teller décrite dans « Journal of the American Chemical Society », vol. 60 p. 309 (1938).

La surface CTAB est déterminée par adsorption de bromure de cétyl-triméthylammonium à pH 9 selon la méthode de Jay-Janzen-Kraus (Rubber Chemistry and Technology 44 (1971) p. 1287-1296).

Le volume spécifique $V_0$ exprimé en $cm^3/g$ est déterminé de la manière suivante :

Dans une matrice de diamètre intérieur égal à 25 mm et de hauteur égale à 80 mm on ajoute 3 g de

silice puis dispose au-dessus un piston sur lequel on ajoute un poids déterminé de manière à exercer sur la silice une pression de 4 $kg/cm^2$. Le volume spécifique de la silice est alors mesuré. C'est le volume « $V_0$ » exprimé en $cm^3/g$.

La teneur en sodium résiduel correspond au sodium total. Cette teneur est mesurée par spectroémission de flamme après dissolution de la silice par l'acide fluorhydrique.

Le pH est mesuré sur une suspension de silice à 5 % dans l'eau.

La nature des compositions organosiliciques selon l'invention et pouvant après vulcanisation être renforcées par les silices précédemment décrites n'est pas critique. De manière générale, les compositions organosiliciques peuvent être solides, gommeuses, pâteuses ou liquides.

Dans ces compositions, le polymère organosilicique mis en œuvre et vulcanisable est tel que désignant par R les radicaux de nature hydrocarbonée liés aux atomes de silicium, le rapport entre le nombre total de radicaux R et le nombre total d'atomes de silicium, est compris entre 0,5 et 3. Dans la constitution du polymère organosilicique, les autres valences disponibles du silicium sont reliées à des hétéro-atomes tels que l'oxygène ou l'azote, ou bien à des radicaux hydrocarbonés multivalents.

Préférentiellement les compositions organosiliciques chargées selon l'invention sont des compositions organopolysiloxaniques dans lesquelles l'organopolysiloxane peut être linéaire ramifié ou réticulé, et éventuellement comporter en plus des radicaux hydrocarbonés des groupements réactifs comme par exemple des groupements hydroxyles, des groupements hydrolysables, des groupements alkényle, des atomes d'hydrogène.

Plus précisément les organopolysiloxanes constituants principaux des compositions selon l'invention sont constitués de motifs siloxaniques de formule générale :

$$R_nSiO_{(4-n)/2} \qquad (I)$$

éventuellement associés à des motifs siloxaniques de formule :

$$Z_xR_ySiO_{(4-x-y)/2} \qquad (II)$$

Dans ces formules les divers symboles ont la signification suivante :

R : un groupement de nature hydrocarbonée non hydrolysable, ce radical pouvant être :

un radical alcoyle ou halogénoalkyle ayant de 1 à 5 atomes de carbone et comportant de 1 à 6 atomes de chlore et/ou de fluor ;

des radicaux cycloalcoyles et halogénocycloalcoyles ayant de 3 à 8 atomes de carbone et contenant de 1 à 4 atomes de chlore et/ou de fluor ;

des radicaux aryles, alcoylaryles et halogénoaryles ayant de 6 à 8 atomes de carbone et contenant de 1 à 4 atomes de chlore et/ou de fluor ;

des radicaux cyanoalcoyles ayant de 3 à 4 atomes de carbone.

Z : un atome d'hydrogène, un groupement alkényle, un groupement hydroxyle, un atome hydrolysable, un groupement hydrolysable.

n : un nombre entier égal à 0, 1, 2 ou 3.

x : un nombre entier égal à 0, 1, 2 ou 3.

y : un nombre entier inférieur ou égal à 2.

A titre illustratif, on peut citer parmi les radicaux organiques R, directement liés aux atomes de silicium :

Les groupes méthyle : éthyle ; propyle ; isopropyle ; butyle ; isobutyle ; α-pentyle ; t-butyle ; chlorométhyle ; dichlorométhyle ; α-chloroéthyle ; α,β-dichloroéthyle ; fluorométhyle ; difluorométhyle ; α,β-difluoroéthyle ; trifluoro-3,3,3 propyle ; trifluoro cyclopropyle ; trifluoro-4,4,4 butyle ; heptafluoro-3,3,4,4,5,5 pentyle ; β-cyanoéthyle ; γ-cyanopropyle ; phényle ; p-chlorophényle ; m-chlorophényle ; dichloro-3,5 phényle ; trichlorophényle ; tétrachlorophényle ; o-, p-, ou m-tolyle ; α,α,α-trifluorotolyle ; xylyles comme diméthyl-2,3 phényle ; diméthyl-3,4 phényle.

Préférentiellement les radicaux organiques liés aux atomes de silicium sont des radicaux méthyle, phényle, vinyle, ces radicaux pouvant être éventuellement halogénés ou bien encore des radicaux cyanoalkyle.

Les symboles Z peuvent être des atomes d'hydrogène, des atomes de chlore, des groupements vinyles, des groupements hydroxyles ou des groupements hydrolysables tels que : amino, amido, aminoxy, oxime, alcoxy, alcoxyalcoxy, alkenyloxy ou acyloxy.

La nature de l'organopolysiloxane et donc les rapports entre les motifs siloxaniques (I) et (II) et la répartition de ceux-ci est comme on le sait choisie en fonction de l'application envisagée et en fonction du traitement de vulcanisation qui sera effectuée sur la composition.

Il peut ainsi s'agir de compositions vulcanisables à température élevée sous l'action de peroxydes organiques tels que le peroxyde de dichloro-2,4 benzoyle, le peroxyde de benzoyle, le perbenzoate de t-butyle, le peroxyde de cumyle, le peroxyde de di-t-butyle.

L'organopolysiloxane entrant dans de telles compositions est alors constitué essentiellement de motifs siloxaniques I et ne contient pas de groupes ou d'atomes hydrolysables.

Les polyméthylpolysiloxanes terminés par des groupements triméthylsilyles représentent un exemple

particulièrement important de cette catégorie sur le plan industriel.

La vulcanisation peut être également effectuée à température ambiante ou à température modérée par création de réticulations entre des groupements vinylsilylés et des groupements hydrogénosilylés, la réaction d'hydrosilylation étant effectuée en présence de catalyseurs tels que les dérivés du platine. Les organopolysiloxanes mis en œuvre ne contiennent pas alors d'atomes ou de groupements hydrolysables.

La vulcanisation peut être effectuée sous l'action de l'humidité. Les organopolysiloxanes contenus dans les compositions de ce type contiennent des atomes ou des groupements hydrolysables tels que précédemment définis. Les motifs siloxaniques II contenant de tels groupements représentent au plus 15 % en poids de la masse totale de l'organopolysiloxane mis en œuvre. Les compositions organopolysiloxaniques de ce type contiennent généralement des catalyseurs tels que les sels d'étain.

La vulcanisation peut enfin être effectuée en présence d'agents de réticulation. Les organopolysiloxanes entrant dans ces compositions sont en général des polysiloxanes linéaires ramifiées ou réticulées constituées de motifs I et II dans lesquels Z est un groupement hydroxyle et où x est au moins égal à 1. L'agent de réticulation peut être un silane polyfonctionnel tels que le méthyltriacétoxysilane, l'isopropyltriacétoxysilane, le vinyltriacétoxysilane, le méthyltris(diéthylaminoxy) silane. Divers autres composés tels que les silicates peuvent être utilisés comme agents de réticulation.

Les silices de précipitation incorporées dans les compositions organosiliciques selon l'invention et telles que précédemment définies par leurs caractéristiques physico-chimiques sont de manière générale non microporeuses, de grande surface et de haute finesse de particules.

Les silices utilisées dans les compositions organosiliciques selon l'invention peuvent être élaborées de diverses manières en mettant en œuvre les techniques de préparation connues avec addition initiale de tout le silicate, addition simultanée de silicate et d'acide, traitement de post-addition, à condition de bien choisir les valeurs des divers paramètres interdépendants de telle manière que l'on parvienne aux résultats désirés, la variation de l'un des paramètres étant compensée par le choix des valeurs des autres paramètres.

On peut par exemple introduire progressivement dans une solution aqueuse de silicate alcalin de l'anhydride carbonique ou une solution aqueuse d'acide minéral fort jusqu'à la formation du gel puis précipitation de la silice. L'addition de la solution d'acide est en général effectuée en plusieurs phases et préférentiellement la coulée de l'acide est interrompue dès l'apparition de l'opalescence traduisant une montée rapide en viscosité, la coulée de l'acide n'est reprise qu'après rupture du gel, de manière à amener la valeur du pH entre 9 et 7. Durant cette dernière coulée d'acide on élève rapidement la température et la maintient proche de 100 °C au moins durant 20 minutes et de préférence pendant 30 minutes. Sans être lié par les explications qui vont suivre on peut estimer que le traitement de chauffage précédent et dans cette gamme de pH permet le bouchage des micropores éventuellement présents.

On redémarre ensuite la coulée de l'acide jusqu'à amener le pH du milieu à une valeur comprise entre 3,5 et 5,5, filtre la silice précipitée, et la lave à l'eau pure (eau désionisée par exemple). Toute eau dont la conductivité est inférieure à $3 \times 10^{-4}$ Ω/cm²/cm peut être utilisée.

Préférentiellement le lavage est successivement réalisé au moyen d'eau pure légèrement acidifiée à pH 5-4 puis d'eau pure. Après lavage on sèche et micronise la silice selon les techniques usuelles. Le séchage est par exemple effectué dans un appareil à courants tourbillonnaires tel que décrit dans la demande de brevet français n° 2 257 326, le temps de passage y est inférieur à la minute.

La micronisation est réalisée au moyen d'appareil du type Jet O-MIZER et autres décrits dans Chemical Engineers, Handbook de Jh. Perry 5e édition partie 8/43. Les conditions du séchage et de la micronisation sont adaptées de manière à obtenir et selon la technique usuelle de l'homme de l'art, des valeurs convenables en ce qui concerne les paramètres $V_0$, teneur en humidité.

En règle générale, dans le cadre du procédé qui vient d'être décrit les solutions aqueuses de silicates contiennent de 50 à 120 g/l en équivalent pondéral de dioxyde de silicium, le rapport molaire $SiO_2$/oxyde alcalin ($Na_2O$) est compris entre 2,5 et 4 et les solutions acides peuvent être utilisées diluées ou concentrées.

La température de neutralisation de la solution aqueuse de silicate est initialement comprise entre 50 °C et 95 °C avant le chauffage ultérieur de bouchage des micropores.

La température de neutralisation doit être choisie d'autant plus élevée que le milieu où va se former le gel puis le précipité de silice, est plus dilué. A même dilution, l'élévation de température permet en effet de diminuer les surfaces des silices de précipitation ; si le milieu est plus concentré on opèrera alors dans des zones plus basses de températures (50 à 70 °C par exemple).

Par ailleurs, selon des variantes préférentielles on peut initialement ajouter dans la solution aqueuse de silicate un agent séquestrant, permettant de complexer au moins en partie et préférentiellement en totalité les traces d'impuretés métalliques (en particulier métaux alcalino-terreux tels que le calcium et le magnésium), qui sont en pratique toujours présentes dans le silicate à très faible teneur. Parmi les complexants utilisables on peut citer : l'acide éthylènediamine tétracétique (EDTA), le nitrilotriacétate de soude (NTA), le diéthylènetriaminopentacétate de soude (DTPA) et le tripolyphosphate de sodium (STPP).

Selon une autre variante préférentielle, on peut diluer à l'eau le milieu de formation de la silice après rupture du gel d'acide polysilicique. Cette dilution est bénéfique puisqu'elle permet d'améliorer la lavabilité du gâteau de silice. Par ailleurs, selon une autre variante il est également possible de mettre en

œuvre une technique dite « neutralisation, avec recirculation » et consistant à neutraliser par l'acide, la solution aqueuse de silicate alcalin dans un réacteur de faible capacité (par rapport à la quantité globale de solution aqueuse de silicate) en y faisant circuler de manière régulière et en circuit fermé la solution aqueuse de silicate de soude initialement introduite dans une capacité de taille importante après neutralisation le mélange retourne dans la capacité. Une telle.technique est par exemple décrite dans le brevet français 1 160 762.

La silice de précipitation que l'on incorpore dans les compositions organosiliciques selon l'invention peut être préparée en mettant en œuvre un procédé analogue à celui qui vient d'être décrit mais dans lequel après avoir amené le pH du milieu à une valeur comprise entre 9 et 7 par coulée d'acide, on effectue, en conservant approximativement les mêmes conditions de température, un traitement dit de post-addition consistant à ajouter une solution aqueuse de silicate amenant environ 15 à 50 parties de silicate pour 100 parties de silicates mises au départ. La post-addition peut être effectuée instantanément de manière continue et en plusieurs fois éventuellement mais il est nécessaire dans tous les cas de maintenir la valeur du pH entre 9 et 7 par coulée supplémentaire d'acide. Durant la post-addition une recirculation analogue à celle précédemment décrite peut être mise en œuvre.

Le bouchage des micropores étant achevé, la coulée d'acide est poursuite de manière à amener le pH à une valeur comprise entre 5,5 et 3,5. Durant cette dernière coulée d'acide ou après la fin de celle-ci la température du milieu est élevée jusqu'à une valeur voisine de 100 °C. La silice est alors séparée, filtrée, lavée, séchée, micronisée comme dans le précédent procédé. Selon une variante préférentielle on assure durant toutes les coulées d'acide et de silicates une recirculation selon un mode opératoire analogue à celui décrit dans le brevet français 1 160 762. Cette recirculation peut par ailleurs n'être assurée qu'avant la formation du gel. L'addition d'eau après la rupture du gel d'acide polysilicique, et/ou l'addition initiale d'agent séquestrant peuvent être utilisées.

Selon un mode opératoire différent on peut préparer les silices selon l'invention par coulée simultanée de solution acide, et de solution de silicate alcalin. On démarre en général les coulées simultanées sur un fond de silicate dilué et ayant un pH compris entre 10,2 et 8. Préférentiellement un agent séquestrant est introduit dans la solution aqueuse de silicate constituant le pied ; le fond représente en général de 15 à 20 % du volume total final. L'acide et le silicate sont introduits dans le réacteur à une température comprise entre 80 °C et 95 °C en maintenant le pH à une valeur comprise entre 9,8 et 10,2. Lorsque tout le silicate est introduit, on effectue un traitement thermique de peptisation en amenant le pH entre 9 et 7 et en chauffant le milieu aux alentours de 100 °C. Ce traitement étant achevé (il dure en général au moins 20 minutes), on reprend la coulée d'acide pour amener le pH à une valeur comprise entre 5,5 et 3,5. La silice est alors séparée, lavée, séchée et micronisée comme dans les précédents procédés. Selon une variante dudit procédé on peut utiliser la technique de neutralisation avec recirculation du fond de silicate dans le réacteur de neutralisation (technique analogue à celle décrite dans le brevet français 1 160 762).

Selon une variante de l'invention les compositions organosiliciques peuvent contenir à titre d'agent de renforcement des silices de précipitation telles que précédemment définies et ayant subi ultérieurement un traitement usuel de modification de leurs propriétés de surface, en les rendant en particulier hydrophobes. De telles silices modifiées conviennent également bien pour le renforcement des élastomères organopolysiloxaniques. La nature des divers agents destinés à modifier les propriétés de surface n'est pas critique. Les agents utilisés sont généralement de nature organosilicique tels que les silazanes (l'hexaméthyldisilazane), les alcoylsilanes (triméthylsilane), les alcoylalcoxysilanes (triméthyléthoxysilane), les alcoylchlorosilanes, les alcénylchlorosilanes, les organopolysiloxanes $\alpha$-$\omega$-dihydroxylés et les cyclosiloxanes et sont par exemple décrits dans les brevets français 2 356 596 et 2 395 952.

Par ailleurs les silices de précipitation peuvent subir un traitement thermique à une température en général comprise entre 200 °C et 800 °C, un tel traitement réduit la teneur en eau ainsi que la reprise à l'humidité.

Comme toutes les silices de précipitation, les silices utilisées dans le cadre de la présente invention peuvent contenir une teneur en humidité relative variable selon les conditions de fabrication et/ou de stockage. Cette teneur est en général comprise entre 2 et 6 % (mesurée par chauffage durant 2 heures à 105 °C). La teneur en eau des silices incorporées dans les compositions organopolysiloxaniques est évidemment fonction de l'application désirée. Pour les compositions extrudables cette teneur doit être inférieure à 3 %.

Les compositions organosiliciques selon l'invention contiennent de 5 à 50 % et de préférence de 10 à 40 % de silices de précipitation éventuellement traitées telles que précédemment définies.

En outre, en plus des polysiloxanes, de la silice précipitée éventuellement traitée, des agents de réticulation et des catalyseurs de réticulation, les compositions peuvent contenir des charges usuelles telles que du quartz pulvérisé, de la terre de diatomées, du talc ou du noir de carbone. Les compositions peuvent en outre contenir des adjuvants divers usuels comme des agents antistructures des stabilisants thermiques, des agents thixotropiques, des pigments des inhibiteurs de corrosion.

Les agents antistructures, connus également sous la dénomination de plastifiants, sont en général de nature organosilicique et sont introduits à raison de 0 à 20 parties pour 100 parties de gomme organosilicique. Ils permettent d'éviter le durcissement des compositions lors du stockage. Parmi les agents antistructures on peut citer les silanes à groupements hydrolysables, ou des huiles diorganopolysi-

loxaniques hydroxylées ou alcoxylées de faible poids moléculaire. De telles compositions sont par exemple décrites dans le brevet français 1 111 969.

Parmi les stabilisants thermiques qui sont bien connus de l'homme de l'art on peut citer les sels, les oxydes et les hydroxydes, de fer de cérium ou de manganèse. Ces additifs qui peuvent être utilisés seuls ou en mélange sont en général introduits à raison de 0,01 à 5 % par rapport au poids de la gomme organopolysiloxanique mise en œuvre.

Les compositions organopolysiloxaniques sont préparées en mélangeant les divers ingrédients de la composition tels que précédemment décrits. Le mélange peut être effectué à température ambiante ou à chaud qu'il s'agisse de silice traitée ou non en vue de modifications de ses propriétés de surface.

Après vulcanisation les compositions organopolysiloxaniques selon l'invention conduisent en particulier à des élastomères dont les propriétés mécaniques et thermiques sont du même ordre que celles des élastomères organopolysiloxaniques renforcées à l'aide de silice de combustion. L'utilisation des compositions organosiliciques selon l'invention constitue également pour l'obtention de matériaux durcis, un objet de la présente invention.

Les exemples qui suivent illustrent l'invention.

## Exemple 1

Préparation et utilisation d'une composition organopolysiloxanique (EVC)

a) Préparation de la composition

On homogénéise 100 parties d'une gomme polydiméthylsiloxanique (renfermant 720 mg de groupement vinyle par kg, cette gomme dévolatilisée est terminée par des motifs triméthylsiloxy et possède à 25 °C une viscosité de $20 \times 10^6$ centipoises ($2 \times 10^4$ Pa.s) ($\bar{M_w} = 6 \times 10^5$), ajoute 0,4 parties d'un empâtage à 50 % d'octoate de fer dans un échantillon de gomme polydiméthylsiloxanique, introduit 6 parties d'agent antistructure (polydiméthylsiloxane α-ω-dihydroxylé contenant 8,3 % d'hydroxyle), puis 40 parties de silice de précipitation ayant les caractéristiques physico-chimiques suivantes :

| | |
|---|---|
| surface BET | 242 $m^2/g$ |
| surface CTAB | 237 $m^2/g$ |
| rapport surface BET/CTAB | 1,021 |
| teneur en sodium résiduel | 425 ppm |
| pH | 5,1 |
| volume spécifique $V_0$ | 4,8 $cm^3/g$ |
| taille des particules estimée par refus au tamis de 45 μm | < 0,05 % |
| humidité à 105 °C | 5,90 % |
| perte à 1 200 °C | 9,22 % |

Enfin on introduit dans la composition organopolysiloxanique l'agent de vulcanisation constitué par 1 partie d'un empâtage à 50 % de peroxyde de dichloro-2,4 benzoyle, dans une huile polyorganosiloxanique.

La vulcanisation est ensuite réalisée par chauffage des mélanges disposés dans des moules de 2 mm d'épaisseur durant 8 minutes à 115 °C sous presse (60 $kg/cm^2$). Les élastomères subissent éventuellement un traitement de recuit durant 16 heures à 200 °C.

Par ailleurs, les compositions organopolysiloxaniques non encore chargées en agent de vulcanisation ont été réalisées à température ambiante ou à 150 °C.

b) Propriétés des élastomères

Les propriétés mécaniques des élastomères organopolysiloxaniques obtenus après vulcanisation et éventuellement recuisson ont été comparées à celles des élastimères obtenus en remplaçant la silice de précipitation par une silice de combustion ayant sensiblement la même surface (« Cab-O-sil »[R] surface BET 217 $m^2/g$ ; surface CTAB 206 $m^2/g$).

Les résultats figurent dans les tableaux qui suivent :

(Voir tableaux pages 7 et 8)

Mélanges vulcanisés et non recuits

| | Composition organopolysiloxanique mélangée à 25 °C | | Composition organopolysiloxanique mélangée 1 h 30 min à 150 °C | |
|---|---|---|---|---|
| | Silice de précipitation de l'invention | Silice Cab-O-Sil[R] | Silice de précipitation de l'invention | Silice Cab-O-Sil[R] |
| Dureté shore A | 61 | 55 | 49 | 46 |
| Module $kg/cm^2$ (100 %) ($1\ kg/cm^2 = 9{,}8 \cdot 10^4$ Pa) | 19,8 | 14,5 | 20,5 | 16,6 |
| Résistance à la rupture $kg/cm^2$ ($1\ kg/cm^2 = 9{,}8 \cdot 10^4$ Pa) | 76 | 76 | 80 | 71 |
| Allongement à la rupture % | 430 | 449 | 428 | 385 |
| Résistance à la déchirure kg/cm ($1\ kg/cm = 9{,}8 \cdot 10^2$ N/m) | 18 | 15 | 15 | 11 |
| Résilience Zwick % | 39 | 42 | 46 | 41 |
| Déformation rémanente à la compression % (70 h à 150 °C/30 %) | 78 | 75 | 62 | 59 |

Mélanges vulcanisés et recuits 16 h à 200 °C

| | Composition organopolysiloxanique mélangée à 25 °C | | Composition organopolysiloxanique mélangée 1 h 30 min à 150 °C | |
|---|---|---|---|---|
| | Silice de précipitation de l'invention | Silice Cab-O-Sil[R] | Silice de précipitation de l'invention | Silice Cab-O-Sil[R] |
| Dureté shore A | 74 | 69 | 58 | 55 |
| Module $kg/cm^2$ (100 %) ($1\ kg/cm^2 = 9{,}8 \cdot 10^4$ Pa) | 30 | 22,5 | 26,9 | 22 |

(Suite)

| | Composition organopolysiloxanique mélangée à 25 °C | | Composition organopolysiloxanique mélangée 1 h 30 min à 150 °C | |
|---|---|---|---|---|
| | Silice de précipitation de l'invention | Silice Cab-O-Sil$^R$ | Silice de précipitation de l'invention | Silice Cab-O-Sil$^R$ |
| Résistance à la rupture $kg/cm^2$ (1 $kg/cm^2$ = 9,8 · $10^4$ Pa) | 73 | 80 | 86 | 83 |
| Allongement à la rupture % | 302 | 316 | 330 | 358 |
| Résistance à la déchirure kg/cm (1 kg/cm = 9,8 · $10^2$ N/m) | 14 | 15 | 11 | 12 |
| Résilience Zwick % | 46 | 48 | 54 | 49 |
| Déformation rémanente à la compression % (70 h à 150 °C 30 %) | 21 | 23 | 15 | 17 |

c) Procédé de préparation de la silice de précipitation

La silice de précipitation utilisée à l'exemple 1 a été préparée de la manière suivante :

Dans un récipient violemment agité on introduit 108 kg de solution aqueuse de silicate de soude porté à 76 °C (la solution aqueuse de silicate de soude a une concentration initiale en $SiO_2$ égale à 80 g/l ; le rapport r est égal à 3,5). On ajoute dans cette solution 0,33 kg d'une solution aqueuse à 40 % de diathylènetriamino-pentacétate de soude, puis établit à raison de 2 $m^3/h$ une recirculation de la solution dans un réacteur agité de petite capacité (5 l) commodément appelé par la suite préréacteur. Tout en maintenant à 76 °C la solution on coule à raison de 130 $cm^3$/minute dans le préréacteur et durant 50 minutes une solution aqueuse sulfurique de densité d = 1,22.

La coulée est interrompue après 10 mm lorsque est apparue une opalescence nette. On ajoute alors en 15 minutes et en maintenant la température 62 litres d'eau puis élève la température vers 90 °C après la 70$^e$ minute. Cette température est atteinte à la 88$^e$ minute. A partir de cet instant on ajoute dans le préréacteur et jusqu'à la 128$^e$ minute 37 kg de solution aqueuse de silicate de soude à raison de 625 $cm^3$/minute tout en maintenant le pH à 7,5 ± 0,1 par coulée de la solution acide à raison de 63 $cm^3$/minute et tout en maintenant la température entre 85 °C et 90 °C. La coulée additionnelle de silicate étant terminée à la 128$^e$ minute on poursuit la coulée d'acide jusqu'à amener le pH à 3,5 tout en continuant à chauffer à 90-100 °C. La silice est ensuite filtrée, lavée, séchée par séchage flash dans un appareil du type de ceux décrits dans le brevet français 2 257 326 et micronisée dans un appareil du type Jet-O-MIZER et autres décrits dans Chemical Engineers' Handbook-5$^e$ édition 8-43 ou 8-44.

Exemple 2

On mélange à température ambiante sur malaxeurs à rouleaux 100 parties de gomme siloxanique de l'exemple 1, 4 parties d'antistructure de l'exemple 1 et ajoute 35 parties de silice de précipitation ayant les caractéristiques suivantes :

| | |
|---|---|
| surface BET | 206 $m^2/g$ |
| surface CTAB | 194 $m^2/g$ |
| rapport surface BET/CTAB | 1,062 |
| teneur en sodium résiduel | 150 ppm |
| pH | 5,1 |
| volume spécifique $V_0$ | 5 $cm^3/g$ |
| taille des particules estimée par refus au tamis 45 µm | < 0,05 % |
| humidité à 105 °C | 3 % |

Enfin, on introduit dans la composition organopolysiloxanique 1 partie d'un empâtage à 50 % de peroxyde de dichloro-2-4 benzoyle.

Les conditions de vulcanisation et recuisson sont identiques à celles de l'exemple 1.

Les résultats figurent dans le tableau suivant :

Mélanges vulcanisés et recuits 16 h à 200 °C

| | Composition organopolysiloxanique mélangée à 25 °C | | Composition organopolysiloxanique mélangée 1 h 30 min à 150 °C | |
|---|---|---|---|---|
| | Silice de précipitation de l'invention | Silice Cab-O-Sil[R] | Silice de précipitation de l'invention | Silice Cab-O-Sil[R] |
| Dureté shore A | 58 | 60 | | |
| Module $kg/cm^2$ (100 %) (1 $kg/cm^2 = 9{,}8 \cdot 10^4$ Pa) | 20,9 | 20,3 | | |
| Résistance à la rupture $kg/cm^2$ (1 $kg/cm^2 = 9{,}8 \cdot 10^4$ Pa) | 79 | 80 | | |
| Allongement à la rupture % | 360 | 350 | | |
| Résistance à la déchirure kg/cm (1 kg/cm = $9{,}8 \cdot 10^2$ N/m) | 10 | 11 | | |
| Resilience Zwick % | 45 | 43 | | |
| Déformation rémanente à la compression % (70 h à 150 °C/30 %) | 12 | 15 | | |

Préparation de la silice de précipitation utilisée à l'exemple 2

Dans un réacteur fortement agité on ajoute 30 l d'eau et 0,5 l d'une solution aqueuse à 40 % de diéthylènetriaminopentacétate de soude puis commence l'addition de la solution aqueuse de silicate de soude (concentration en $SiO_2$ de 80 g/l ; le rapport r égal à 3,5) à raison de 1 250 $m^3$/minute en maintenant la température entre 80 et 100 °C jusqu'à amener le pH à une valeur de 10. On poursuit la coulée du silicate et commence simultanément la coulée de l'acide (acide sulfurique à 92,5 g/l) à raison de 310 $cm^3$/minute. A la 100e minute on arrête la coulée de silicate et poursuit l'addition d'acide jusqu'à pH

égal à 8 puis chauffe à 95 °C pendant 20 minutes. La coulée d'acide est alors reprise pour amener le pH à une valeur de 3,5. La silice est ensuite filtrée, lavée, séchée, broyée, micronisée comme dans le précédent exemple.

Exemple 3

On prépare une composition organopolysiloxanique en substituant dans la formule de la composition organopolysiloxanique de l'exemple 2 la silice de précipitation par la silice de précipitation ayant les caractéristiques physico-chimiques suivantes :

| | |
|---|---|
| surface BET | 240 $m^2/g$ |
| surface CTAB | 224 $m^2/g$ |
| rapport surface BET/CTAB | 1,071 |
| teneur en sodium résiduel | 300 ppm |
| volume spécifique $V_0$ | 4,2 $cm^3/g$ |
| taille des particules estimée par refus au tamis 45 μm | < 0,05 % |
| humidité à 105 °C | 6,3 % |

Les conditions de vulcanisation sont identiques à celles de l'exemple 1.
Les résultats figurent dans le tableau suivant :

Mélanges vulcanisés et recuits 16 h à 200 °C

| | Composition organopolysiloxanique mélangée à 25 °C | |
|---|---|---|
| | Silice de précipitation de l'invention | Silice Cab-O-Sil[R] |
| Dureté Shore A | 65 | 60 |
| Module $kg/cm^2$ (100 %) (1 $kg/cm^2 = 9,8 \cdot 10^4$ Pa) | 22,0 | 20,3 |
| Résistance à la rupture $kg/cm^2$ (1 $kg/cm^2 = 9,8 \cdot 10^4$ Pa) | 78 | 80 |
| Allongement à la rupture % | 320 | 350 |
| Résistance à la déchirure kg/cm (1 kg/cm = $9,8 \cdot 10^2$ N/m) | 11 | 11 |
| Résilience Zwick % | 40 | 43 |
| Déformation rémanente à la compression % (70 h à 150 °C/30 %) | 11 | 15 |

Procédé de préparation de la silice utilisée à l'exemple 3

Dans un réacteur violemment agité on introduit 13,2 l de solution aqueuse de silicate de soude porté à 90 °C (la solution aqueuse de silicate de soude a une concentration initiale en $SiO_2$ égale à 55 g/l ; le rapport r est égal à 3,5).

On ajoute dans cette solution 2 g de complexant (nitrilotriacétate de soude) puis ajoute progressivement une solution aqueuse d'acide sulfurique à 30 % à raison de 13,3 $cm^3$/minute. La coulée est interrompue à la 20<sup>e</sup> minute alors qu'est apparue l'opalescence.

La coulée d'acide est reprise à la 47<sup>e</sup> minute puis poursuivie jusqu'à la 82<sup>e</sup> minute alors que le pH est devenu égal à 7,5. On ajoute ensuite et à raison de 80,2 $cm^3$/minute une nouvelle quantité de silicate de soude à concentration identique et ceci jusqu'à la 122<sup>e</sup> minute tout en maintenant la température et la valeur du pH entre 7,5 ± 0,2 par coulée de la solution aqueuse d'acide. Après la fin de la coulée de la solution de silicate, la coulée de la solution aqueuse acide est poursuivie jusqu'à ce que le pH soit amené à une valeur de 3,5. La silice est ensuite filtrée, lavée, séchée, broyée, micronisée comme dans les exemples précédents.

Exemple 4

On prépare une composition organopolysiloxanique vulcanisable à chaud selon l'exemple 1 en substituant à la silice de précipitation de cet exemple une silice de précipitation traitée à l'octaméthylcyclotétrasiloxane et ayant les caractéristiques suivantes :

| | |
|---|---|
| surface BET | 150 $m^2/g$ |
| teneur en sodium résiduel | 400 ppm |
| volume spécifique $V_0$ | 4,2 $cm^3/g$ |
| taille des particules estimée par refus au tamis de 45 μm | < 0,05 % |
| humidité à 105 °C | 1,5 % |

Cette silice de précipitation a été obtenue par chauffage avec de l'octaméthylcyclotétrasiloxane de la silice de précipitation de nature hydrophile telle que décrite à l'exemple1.

La composition obtenue a été ensuite vulcanisée et recuite selon le mode opératoire de l'exemple 1.

Les résultats figurent dans le tableau suivant :

Mélanges vulcanisés et non recuits

| | Composition organopolysiloxanique mélangée à 25 °C | |
|---|---|---|
| | Silice de précipitation de l'invention | Silice Cab-O-Sil$^R$ traitée |
| Dureté Shore A | 65 | 58 |
| Module $kg/cm^2$ (100 %) (1 $kg/cm^2$ = $9,8 \cdot 10^4$ Pa) | 35 | 23 |
| Résistance à la rupture $kg/cm^2$ (1 $kg/cm^2$ = $9,8 \cdot 10^4$ Pa | 86 | 93 |
| Allongement à la rupture % | 324 | 396 |
| Résistance à la déchirure kg/cm (1 kg/cm = $9,8 \cdot 10^2$ N/m) | 19 | 20 |
| Résilience Zwick % | 36 | 36 |
| Déformation rémanente à la compression % (70 h à 150 °C/30 %) | 48 | 65 |

Mélanges vulcanisés et recuits 16 h à 200 °C

| | Composition organopolysiloxanique mélangée à 25 °C | |
|---|---|---|
| | Silice de précipitation de l'invention | Silice Cab-O-Sil$^R$ traitée |
| Dureté Shore A | 70 | 65 |
| Module $kg/cm^2$ (100 %) (1 $kg/cm^2$ = $9,8 \cdot 10^4$ Pa) | 36 | 33 |

(Suite)

| | Composition organopolysiloxanique mélangée à 25 °C | |
|---|---|---|
| | Silice de précipitation de l'invention | Silice Cab-O-Sil[R] traitée |
| Résistance à la rupture kg/cm² (1 kg/cm² = 9,8 · $10^4$ Pa) | 85 | 99 |
| Allongement à la rupture % | 282 | 306 |
| Résistance à la déchirure kg/cm (1 kg/cm = 9,8 · $10^2$ N/m) | 15 | 18 |
| Résilience Zwick % | 39 | 40 |
| Déformation rémanente à la compression % (70 h à 150 °C/30 %) | 16 | 22 |

Exemple 5

Préparation d'une composition organopolysiloxanique vulcanisable à froid

On homogénéise à température ambiante dans un malaxeur 100 parties d'huile polydiméthylsiloxanique dihydroxylée de viscosité 60 000 cst ($6 \times 10^6$ $m^2$ $s^{-1}$) à 25 °C ($\overline{M_w}$ = $1,3 \times 10^5$), ajoute 5 parties d'un agent thixotropique constitué par un dihydroxy poly(méthylphényl) siloxane contenant 5 % d'hydroxyle, 15 parties de la silice de précipitation décrite à l'exemple 4 puis chauffe le mélange à 150 °C sous pression réduite. Après refroidissement on ajoute le catalyseur (soit 5 parties de méthyltriacétoxysilane) et l'accélérateur de vulcanisation (soit 0,02 parties) du produit de réaction entre 2 moles de dilaurate de dibutylétain et 1 mole de titanate de butyle. Le mélange est homogénéisé sous pression réduite d'azote (400 Pa) puis mis en cartouche.

La vulcanisation des échantillons est faite à température ambiante sous l'action de l'humidité de l'air. Les résultats sont les suivants :

Compositions organopolysiloxaniques renfermant un agent thixotropique et chargées avec la silice de précipitation de l'exemple 4 de la demande ou avec la silice Cab-O-Sil[R]

| | Nature de la silice de précipitation introduite dans la composition | |
|---|---|---|
| | Silice selon l'invention | Cab-O-Sil[R] |
| Extrusion (2 bars) g/min | 113 | 89 |
| Dureté Shore A | 37 | 38 |
| Module kg/cm² à 100 % (1 kg/cm² = 9,8 · $10^4$ Pa) | 10,5 | 11,0 |
| Résistance à la rupture kg/cm² (1 kg/cm² = 9,8 · $10^4$ Pa) | 24 | 29 |
| Allongement à la rupture % | 299 | 318 |

**Revendications**

1. Compositions organopolysiloxaniques durcissables et contenant de 5 à 50 % de silice de précipitation utilisées à titre de charges renforçantes, les silices de précipitation étant obtenues par acidification de solutions aqueuses de silicate alcalin, ce procédé d'obtention des silices de précipitation étant éventuellement suivi d'un traitement de modification des propriétés de surface de la silice, caractérisé en ce que les silices de précipitation non traitées ont les caractères physico-chimiques suivants :

| | |
|---|---|
| surface BET | 190 à 340 $m^2/g$ |
| surface CTAB | 180 à 280 $m^2/g$ |
| rapport surface BET/CTAB | 0,9 à 1,2 |
| teneur en sodium résiduel | < 500 ppm |
| pH | 3,5 à 6 |
| volume spécifique $V_0$ | > 4,2 $cm^3/g$ |
| taille des particules estimée par refus au tamis de 45 μm | < 0,05 % |

2. Compositions organopolysiloxaniques selon la revendication 1 durcissables et contenant des charges renforçantes selon la revendication 1 caractérisées en ce que la silice de précipitation non traitée a les caractéristiques physico-chimiques suivantes :

| | |
|---|---|
| surface BET | 200 à 250 $m^2/g$ |
| surface CTAB | 190 à 240 $m^2/g$ |
| rapport surface BET/CTAB | 0,9 à 1,2 |
| teneur en sodium résiduel | < 500 ppm |
| pH | 4,5 à 5,5 |
| volume spécifique $V_0$ | > 4,2 $cm^3/g$ |
| taille des particules estimée par refus au tamis de 45 μm | < 0,05 % |

3. Compositions selon l'une des revendications 1 et 2 dans lesquelles la silice de précipitation non traitée utilisée a été préparée selon un procédé consistant à effectuer successivement l'ensemble des opérations suivantes :

Introduire progressivement dans une solution aqueuse de silicate alcalin contenant par litre 50 à 120 g de dioxyde de silicium, le rapport molaire $SiO_2$/oxyde alcalin étant compris entre 2,5 et 4, un acide celui-ci étant de l'anhydride carbonique ou une solution aqueuse d'un acide minéral fort, l'introduction étant effectuée en plusieurs phases de la manière suivante : l'addition d'acide effectuée entre 50 °C et 95 °C est d'abord interrompue dès l'apparition de l'opalescence et n'est reprise qu'après la rupture du gel, de manière à amener la valeur du pH entre 9 et 7.

Effectuer un traitement thermique en élevant la température rapidement aux alentours de 100 °C et en maintenant cette température durant au moins 20 minutes, de manière à boucher les micropores.

Reprendre l'addition d'acide pour amener le pH du milieu à une valeur comprise entre 3,5 et 5,5.

Filtrer la silice et la laver à l'eau.

Effectuer le traitement de micronisation et de séchage.

4. Compositions organopolysiloxaniques selon l'une des revendications 1 à 3 dans lesquelles l'organopolysiloxane est constitué de motifs siloxaniques de formule :

$$R_nSiO_{(4-n)/2} \qquad (I)$$

éventuellement associés à des motifs siloxaniques de formule :

$$Z_xR_ySiO_{(4-x-y)/2} \qquad (II)$$

les divers symboles représentent :

R : un groupement de nature hydrocarbonée non hydrolysable pouvant être :

un radical alcoyle ou halogénoalkyle ayant de 1 à 5 atomes de carbone et comportant de 1 à 6 atomes de chlore et/ou de fluor.

des radicaux cycloalcoyles et halogénocycloalcoyles ayant de 3 à 8 atomes de carbone et contenant de 1 à 4 atomes de chlore et/ou de fluor.

des radicaux aryles, alcoylaryles et halogénoaryles ayant de 6 à 8 atomes de carbone et contenant de 1 à 4 atomes de chlore et/ou de fluor.

des radicaux cyanoalcoyles ayant de 3 à 4 atomes de carbone.

Z : un atome d'hydrogène, un groupement alkényle, un groupement hydroxyle, un atome hydrolysable, un groupement hydrolysable.

n : un nombre entier égal à 0, 1, 2 ou 3.

x : un nombre entier égal à 0, 1, 2 ou 3.

y : un nombre entier inférieur ou égal à 2.

5. Compositions organopolysiloxaniques selon la revendication 4, vulcanisables à température élevée sous l'action de peroxydes et ne contenant pas de groupes ou d'atomes hydrolysables.

6. Compositions organopolysiloxaniques selon la revendication 4, vulcanisables par réaction de réticulation entre les groupements vinylsilylés et hydrogénosilylés et ne comportant pas d'atomes ou de groupes hydrolysables.

7. Compositions organopolysiloxaniques selon la revendication 4 durcissables sous l'action de l'humidité et contenant au plus 15 % en poids par rapport à la masse totale de l'organopolysiloxane mis en œuvre, de motifs siloxaniques de formule II dans laquelle Z représente un atome ou un groupement hydrolysable.

8. Compositions organopolysiloxaniques selon la revendication 4, vulcanisables à froid dans lesquelles l'organopolysiloxane est constitué de motifs I et II dans lesquels x est au moin égal à 1 ou Z représente un groupement hydroxyle, lesdites compositions contenant en outre un agent de réticulation.

9. Compositions organopolysiloxaniques selon l'une des revendications 1 à 8 durcissables et contenant des charges renforçantes selon l'une des revendications 1 à 8 caractérisées en ce que la charge renforçante est en partie ou en totalité constituée par une silice de précipitation hydrophile telles que définies dans l'une des revendications 1 à 2.

10. Compositions organosiliciques selon l'une des revendications précédentes durcissables et contenant des charges renforçantes selon l'une des revendications 1 à 9 caractérisées en ce que la charge renforçante est constituée par une silice de précipitation ayant subi un traitement usuel de modifications de ses propriétés de surface, le traitement étant réalisé sur une silice de précipitation de nature hydrophile telle que définie dans l'une des revendications 1 et 2, au moyen d'un agent de traitement de nature organosilicique.

11. Utilisation des compositions organosiliciques selon l'une des revendications 1 à 10 pour l'obtention de matériaux vulcanisés.

**Claims**

1. Hardenable organopolysiloxane compositions containing from 5 to 50 % of precipitated silica, which are used as reinforcing fillers, the precipitated silicas being produced by acidification of aqueous solutions of alkaline silicate, said process for producing the precipitated silicas optionally being followed by a treatment for modifying the surface properties of the silica, characterised in that the untreated precipitated silicas have the following physical-chemical characteristics :

| | |
|---|---|
| BET surface area | 190 to 340 $m^2/g$ |
| CTAB surface area | 180 to 280 $m^2/g$ |
| ratio of BET/CTAB surface areas | 0.9 to 1.2 |
| residual sodium content | < 500 ppm |
| pH | 3.5 to 6 |
| specific volume $V_0$ | > 4.2 $cm^3/g$ |
| particle size estimated by retention on a 45 µm screen | < 0.05 % |

2. Hardenable organopolysiloxane compositions according to claim 1, containing reinforcing fillers according to claim 1, characterised in that the untreated precipitated silica has the following physical-chemical characteristics :

| | |
|---|---|
| BET surface area | 200 to 250 $m^2/g$ |
| CTAB surface area | 190 to 250 $m^2/g$ |
| ratio of BET/CTAB surface areas | 0.9 to 1.2 |
| residual sodium content | < 500 ppm |
| pH | 4.5 to 5.5 |
| specific volume $V_0$ | > 4.2 $cm^3/g$ |
| particle size estimated by retention on a 45 µm screen | < 0.05 % |

3. Compositions according to one of claims 1 and 2 wherein the untreated precipitated silica used was prepared in accordance with a process comprising successively performing the following group of operations :

progressively introducing into an aqueous solution of alkaline silicate containing per litre from 50 to 120 g of silicon dioxide, the $SiO_2$/alkaline oxide molar ratio being between 2.5 and 4, an acid, being carton dioxide or an aqueous solution of a strong mineral acid, the introduction operation being performed in a plurality of phases in the following manner : the step of adding acid, which is performed at from 50 °C to 95 °C, is first interrupted as soon as opalescence appear and is resumed only after breakdown of the gel, so as to adjust the pH to a value of between 9 and 7 ;

effecting a heat treatment by raising the temperature rapidly to the vicinity of 100 °C and maintaining that temperature for at least 20 minutes so as to block the micropores ;

resuming the addition of acid to adjust the pH of the medium to a value of between 3.5 and 5.5 ; filtering the silica and washing it with water ; and effecting the micronisation and drying treatment.

4. Organopolysiloxane compositions according to one of claims 1 to 3 wherein the organopolysiloxane is formed by siloxane groups of the following formula :

$$R_nSiO_{(4-n)/2} \qquad (I)$$

possibly associated with siloxane groups of the following formula :

$$Z_xR_ySiO_{(4-x-y)/2} \qquad (II)$$

the various symbols representing the following :

R : a group of non-hydrolysable hydrocarbon nature which may be :

an alkyl or haloalkyl radical having from 1 to 5 carbon atoms and comprising from 1 to 6 chlorine and/or fluorine atoms,

cycloalkyl and halocycloalkyl radicals having from 3 to 8 carbon atoms and containing from 1 to 4 chlorine and/or fluorine atoms,

aryl, alkylaryl and haloaryl radicals having from 6 to 8 carbon atoms and containing from 1 to 4 chlorine and/or fluorine atoms,

cyanoalkyl radicals having from 3 to 4 carbon atoms ;

Z : a hydrogen atom, an alkenyl group, a hydroxyl group, a hydrolysable atom or a hydrolysable group ;

n : an integer of 0, 1, 2 or 3 ;

x : an integer of 0, 1, 2 or 3 ; and

y : an integer which is less than or equal to 2.

5. Organopolysiloxane compositions according to claim 4 which can be vulcanised at elevated temperature under the action of peroxides and which do not contain hydrolysable groups or atoms.

6. Organopolysiloxane compositions according to claim 4 which can be vulcanised by a cross-linking reaction between the vinylsilyl and hydrogenosilyl groups and which do not comprise hydrolysable groups or atoms.

7. Organopolysiloxane compositions according to claim 4 which can be hardened by the action of humidity and which contain at most 15 % by weight with respect to the total mass of organopolysiloxane used, of siloxane groups of formula II, in which Z represents a hydrolysable atom or group.

8. Organopolysiloxane compositions according to claim 4 which can be cold-vulcanised and in which the organopolysiloxane is formed by groups I and II in which x is at least equal to 1, in which Z represents a hydroxyl group, said compositions further containing a cross-linking agent.

9. Hardenable organopolysiloxane compositions according to one of claims 1 to 8, containing reinforcing fillers according to one of claims 1 to 8, characterised in that the reinforcing filler partly or entirely comprises a hydrophilic precipitated silica as defined in one of claims 1 and 2.

10. Hardenable organosilicon compositions according to one of the preceding claims, containing reinforcing fillers according to one of claims 1 to 9, characterised in that the reinforcing filler is formed by a precipitated silica which has been subjected to a normal treatment for modifying its surface properties, the treatment being carried out on a precipitated silica of hydrophilic nature, as defined in one of claims 1 and 2, by means of a treatment agent of organosilicic nature.

11. Use of the organosilicon compositions according to one of claims 1 to 10, for producing vulcanised materials.

**Patentansprüche**

1. Härtbare Organopolysiloxanzusammensetzungen, die 5 bis 50 % als verstärkenden Füllstoff dienende gefällte Kieselsäure enthält, die ihrerseits durch Ansäuren wässriger Alkalisilikatlösungen gegebenenfalls gefolgt von einer Behandlung der so erhaltenen gefällten Kieselsäure zur Veränderung ihrer Oberflächeneigenschaften, dadurch gekennzeichnet, daß die gefällten nicht behandelten Kieselsäuren folgende physicochemische Daten besitzen :

| | |
|---|---|
| BET-Oberfläche | 190-340 $m^2/g$ |
| CTAB-Oberfläche | 180-280 $m^2/g$ |
| Verhältnis der Oberflächen BET/CTAB | 0,9-1,2 |
| Natriumrestgehalt | < 500 ppm |
| pH | 3,5-6 |
| spezifisches Volumen $V_0$ | > 4,2 $cm^3/g$ |
| geschätzte Teilchengröße durch Zurückhalten auf Sieb von 45 µm | < 0,05 % |

2. Härtbare, den Verstärkerfüllstoff nach Anspruch 1 enthaltende Organopolysiloxanzusammensetzungen nach Anspruch 1, dadurch gekennzeichnet, daß die gefällte unbehandelte Kieselsäure die folgenden physicochemischen Eigenschaften besitzt :

| | |
|---|---|
| BET-Oberfläche | 200-250 $m^2/g$ |
| CTAB-Oberfläche | 190-240 $m^2/g$ |
| Verhältnis der Oberflächen BET/CTAB | 0,9-1,2 |
| Natriumrestgehalt | < 500 ppm |
| pH | 4,5-5,5 |
| spezifisches Volumen $V_0$ | > 4,2 $cm^3/g$ |
| geschätzte Teilchengröße durch Zurückhalten auf Sieb von 45 μm | < 0,05 % |

3. Zusammensetzung nach einem der Ansprüche 1 oder 2, bei dem die verwendete gefällte unbehandelte Kieselsäure nach einem Verfahren hergestellt wurde, welches darin besteht, daß nacheinander die folgenden Maßnahmen durchgeführt wurden :

Einer wässrigen Alkalisilikatlösung, die 50 bis 120 g $SiO_2$/l enthält und deren Molverhältnis $SiO_2$ : Alkalioxid 2,5 bis 4 beträgt, wird nach und nach eine Säure zugegeben, bei der es sich um Kohlendioxid oder um eine wässrige Lösung einer starken Mineralsäure handelt und die Zufuhr wird in mehreren Phasen in folgender Weise durchgeführt : Die Zugabe der Säure bei 50 bis 95 °C wird bei Auftreten einer Opaleszenz zunächst unterbrochen und erst nach Brechen des Gels wieder aufgenommen, um den pH auf einen Wert zwischen 9 und 7 zu brigen.

Durchführung einer thermischen Behandlung durch rasche Temperaturerhöhung auf etwa 100° und Aufrechterhaltung dieser Temperaturen für wenigstens 20 Minuten um die Mikroporen zu verschließen.

Wiederaufnahme der Säurezugabe, um den pH des Reaktionsmilieus auf einen Wert zwischen 3,5 und 5,5 zu brigen.

Filtrieren der Kielsäure und Waschen mit Wasser.

Vornahme der Mikronisierungsbehandlung und Trocknen.

4. Organopolysiloxanzusammensetzung nach einem der Ansprüche 1 bis 3, wobei das Organopolysiloxan aus Siloxaneinheiten der Formel :

$$R_nSiO_{(4-n)/2} \qquad (I)$$

gegebenenfalls verbunden mit Siloxaneinheiten der Formel :

$$Z_xR_ySiO_{(4-x-y)/2} \qquad (II)$$

besteht, wobei die verschiedenen Symbole bedeuten :

R : eine nicht hydrolysierbare Kohlenwasserstoffgruppierung, die sein kann :

ein Alkyl- oder Halogenalkylrest mit 1 bis 5 Kohlenstoffatomen und 1 bis 6 Chlor- und/oder Fluoratomen.

Cycloalkyl- und Halogencycloalkylreste mit 3 bis 8 Kohlenstoffatomen und 1 bis 4 Chlor- und/oder Fluoratomen.

Aryl-, Alkaryl- und Halogenarylreste mit 6 bis 8 Kohlenstoffatomen und 1 bis 4 Chlor- und/oder Fluoratomen.

Cyanoalkylreste mit 3 bis 4 Kohlenstoffatomen.

Z : Ein Wasserstoffatom, eine Alkenylgruppe, eine Hydroxylgruppe, ein hydrolysierbares Atom oder eine hydrolysierbare Gruppe.

n : eine ganze Zahl gleich 0, 1, 2 oder 3.

x : eine ganze Zahl gleich 0, 1, 2 oder 3.

y : eine ganze Zahl kleiner oder gleich 2.

5. Organopolysiloxanzusammensetzung nach Anspruch 4, die bei erhöhter Temperatur unter Einwirkung von Peroxiden vulkanisierbar sind und keine hydrolysierbaren Gruppen oder Atome besitzen.

6. Organopolysiloxanzusammensetzung nach Anspruch 4, die durch Vernetzung zwischen den Vinylsilyl- und Hydrogensilylgruppen vulkanisierbar sind und keine hydrolysierbaren Atome oder Gruppen aufweist.

7. Organopolysiloxanzusammensetzungen nach Anspruch 4, die unter der Einwirkung von Feuchtigkeit härtbar sind und höchstens 15 Gew.%, bezogen auf die gesamte Masse des eingesetzten Polyorganosiloxans an Siloxaneinheiten der Formel II enthalten, in denen Z ein hydrolysierbares Atom oder eine hydrolysierbare Gruppierung bedeutet.

8. Organopolysiloxanzusammensetzungen nach Anspruch 4, die in der Kälte vulkanisierbar sind und bei denen das Organopolysiloxan aus den Einheiten I und II besteht, in denen x wenigstens gleich 1 ist und Z eine Hydroxylgruppe bedeutet, wobei diese Zusammensetzungen ferner ein Vernetzungsmittel enthalten.

9. Organopolysiloxanzusammensetzungen nach einem der Ansprüche 1 bis 8, die härtbar sind und verstärkende Füllstoffe nach einem der Ansprüche 1 bis 8 enthalten, dadurch gekennzeichnet, daß der

verstärkende Füllstoff ganz oder zum Teil aus einer hydrophilen gefällten Kieselsäure besteht, wie sie in einem der Ansprüche 1 oder 2 definiert ist.

10. Organosiliziumzusammensetzungen nach einem der vorhergehenden Ansprüche, die härtbar sind und verstärkende Füllstoffe nach einem der Ansprüche 1 bis 9 enthalten, dadurch gekennzeichnet, daß der verstärkende Füllstoff aus einer gefällten Kieselsäure besteht, die eine übliche Behandlung zur Modifizierung der Eigenschaften ihrer Oberfläche erhalten hat, wobei die Behandlung mittels einer Organosiliziumverbindung als Behandlungsagens an einer gefällten hydrophilen Kieselsäure gemäß den Ansprüchen 1 und 2 vorgenommen wurde.

11. Verwendung der Organosiliziumzusammensetzungen gemäß einem der Ansprüche 1 bis 10, zur Herstellung vulkanisierter Materialien.